# EUROPEAN PATENT APPLICATION

(11) **EP 4 161 002 A1**
(43) Date of publication of application: **05.04.2023**
(21) Application number: 21838070.7
(22) Date of filing: 01.07.2021
(51) Int. Cl.: H04L 12/46

(54) **MESSAGE PROCESSING METHOD AND NETWORK DEVICE**

(30) Priority: 06.07.2020 CN 202010638513; 25.09.2020 CN 202011022649
(71) Applicant: Huawei Technologies Co., Ltd., Longgang District, Shenzhen, Guangdong 518129 (CN)
(72) Inventor: DONG, Jie, Shenzhen, Guangdong 518129 (CN); HU, Zhibo, Shenzhen, Guangdong 518129 (CN); CHEN, Yun, Shenzhen, Guangdong 518129 (CN); HU, Yongjian, Shenzhen, Guangdong 518129 (CN)
(74) Representative: Pfenning, Meinig & Partner mbB
(86) International application number: PCT/CN2021/104000
(87) International publication number: WO 2022/007702

(57) **Abstract**

This application provides a packet processing method and a network device. The method includes: A first network device obtains a packet. The first network device adds first indication information and second indication information to the packet, to obtain an updated packet, where the first indication information and the second indication information are located in a multi-protocol label switching MPLS packet header of the updated packet, the first indication information indicates a network slice corresponding to the packet, and the second indication information indicates a forwarding path of the packet. The first network device sends the updated packet to a second network device. A network slice corresponding to a packet and a forwarding path of the packet are respectively indicated in an MPLS packet header via different indication information. In this way, network devices on the forwarding path can normally forward the packet based on unified network slice indication information, with no need to allocate different MPLS labels to the same network slice. This can effectively save MPLS label resources.

## Description

This application claims priority to Chinese Patent Application No. 202010638513.0, filed with the China National Intellectual Property Administration on July 6, 2020 and entitled "METHOD AND DEVICE FOR CARRYING NETWORK SLICE IDENTIFIER", and claims priority to Chinese Patent Application No. 202011022649.5, filed with the China National Intellectual Property Administration on September 25, 2020 and entitled "PACKET PROCESSING METHOD AND NETWORK DEVICE", both of which are incorporated herein by reference in their entireties.

### TECHNICAL FIELD

This application relates to the field of communication technologies, and in particular, to a packet processing method and a network device.

### BACKGROUND

Segment routing (Segment Routing, SR) is a source routing (Source Routing) technology. A basic principle of SR is to encapsulate one or more segment identifiers (Segment IDs, SIDs) in a data packet header, each of the SIDs indicates a specific node, link, or to-be-executed service function in a network; therefore, each node in the network sequentially selects a node or link that a packet needs to pass through or selects a to-be-executed service function according to an indication of an SID in the packet header. Multi-protocol label switching (Multi-Protocol Label Switching, MPLS) may be used as a data plane technology of SR. In this case, the SID in SR is encapsulated and carried using an MPLS label stack on a data plane. There are two basic SID types of SR-MPLS: a prefix SID (prefix-SID) and an adjacency SID (adj-SID), which are respectively used to identify a node and a link in the SR network. An SID list obtained by combining the two types of SIDs can implement a function of indicating a forwarding path using SR.

Currently, in a solution of implementing network slicing based on SR-MPLS, different SR SIDs are used to identify different network slices to which nodes and links belong. Specifically, each node needs to allocate different prefix-SIDs to different network slices as identifiers of the node in the different network slices. In addition, each node further needs to allocate different adj-SIDs to a connected link in different network slices, to identify resources allocated to the different network slices on the same link. In other words, different nodes and links in a same network slice and same nodes and links in different network slices all need to be identified by different MPLS labels.

Consequently, a large quantity of MPLS labels need to be allocated in the case of a large quantity and a large scale of network slices, causing severe consumption of MPLS label resources.

### SUMMARY

Embodiments of this application provide a packet processing method and a network device. An MPLS packet header is encapsulated for a packet on an MPLS data plane, and a network slice corresponding to the packet and a forwarding path of the packet are respectively indicated in the MPLS packet header via different indication information. In this way, network devices on the forwarding path can normally forward the packet based on unified network slice indication information, with no need to allocate different MPLS labels to the same network slice as network slice identifiers. This can effectively save MPLS label resources. Further, SID resources can also be effectively saved by applying the packet processing method to an SR-MPLS network.

According to a first aspect of this application, a packet processing method is provided. The method includes: A first network device obtains a packet, where the first network device may be a network device in an MPL S network or an SR-MPLS network. The first network device adds first indication information and second indication information to the packet, to obtain an updated packet, where the first indication information and the second indication information are located in an MPLS packet header of the updated packet, the first indication information may include, for example, a network slice identifier and indicate a network slice corresponding to the packet, and the second indication information indicates a forwarding path of the packet. The first network device sends the updated packet to a second network device.

In a possible case, if the packet obtained by the first network device already includes an MPLS packet header, the first network device adds the first indication information and the second indication information to the existing MPLS packet header, to obtain the updated packet. In another possible case, if the packet obtained by the first network device does not include an MPLS packet header, the first network device may add a new MPL S packet header, and add the first indication information and the second indication information to the newly added MPL S packet header, to obtain the updated packet. A location for adding the first indication information and the second indication information may be set in, for example, an MPLS label stack or an MPLS extension header based on a specific design. The first network device that can perform the operation of adding the indication information may be a head node of the MPLS network.

In this solution, an MPLS packet header is encapsulated for a packet on an MPLS data plane, and a network slice corresponding to the packet and a forwarding path of the packet are respectively indicated in the MPLS packet header via different indication information. In this way, network devices can normally forward the packet based on same network slice indication information, with no need to identify the network slice and a node and a link on the forwarding path based on a single MPLS label, in other words, with no need to identify, based on the MPLS label, the network slice to which the node and the link belong. This can effectively save MPLS label resources. SID resources can also be effectively saved by applying the packet processing method to the SR-MPLS network.

Optionally, in a possible implementation, the MPLS packet header includes an MPLS label stack, the MPLS label stack includes a first label field and a second label field, the first label field indicates that the second label field includes the second indication information, and the second label field includes the second indication information. The first indication information and the second indication information are respectively carried by using different label fields in the MPLS label stack, so that scalability of this solution can be improved.

Optionally, in a possible implementation, the first label field includes an extension label (Extension Label, EL) and an extended special purpose label (Extended Special Purpose Label, ESPL).

Optionally, in a possible implementation, the MPLS packet header includes an MPLS special purpose label, and a reserved field in the MPLS special purpose label includes the first indication information.

Optionally, in a possible implementation, the MPLS special purpose label includes an entropy label or a flow identifier (Flow-ID) label.

Optionally, in a possible implementation, the reserved field includes one or more of the following fields: a priority (Traffic Class, TC) field and a time to live (Time to Live, TTL) field.

Optionally, in a possible implementation, the MPLS packet header includes an MPLS extension header, and the MPLS extension header carries the first indication information.

Optionally, in a possible implementation, that the first network device sends the updated packet to a second network device includes: The first network device determines, based on the network slice, a forwarding resource used to send the updated packet. The first network device sends the updated packet by using the forwarding resource.

Optionally, in a possible implementation, the forwarding resource includes one or more of the following resources: a processing resource, an outbound interface resource, and a queue resource of the first network device.

Optionally, in a possible implementation, the updated packet sent by the first network device to the second network device is a first packet, and the method further includes: The first network device further updates the packet to obtain a second packet, where the second packet includes the first indication information and third indication information, and the third indication information indicates a forwarding path of the second packet. The first network device sends the second packet to a third network device. In other words, in addition to sending a packet to the second network device, the first network device may further send the packet to another neighboring network device, to implement multi-path packet forwarding. This implementation may be applied to application scenarios such as high-reliability forwarding or multicast forwarding. The first network device copies a payload and/or other necessary data information of the obtained packet for a plurality of times, for example, generates at least the first packet and the second packet through copying, and adds network slice indication information and forwarding path indication information to each of the first packet and the second packet. Network slice indication information of the first packet and network slice indication information of the second packet may be the same. In this case, the first packet and the second packet that are both multicast duplicate packets of the packet obtained by the first network device may share a same network slice resource. However, forwarding path indication information of the first packet and forwarding path indication information of the second packet may be different, to separately indicate that the first packet and the second packet that are used as the duplicate packets are distributed along different forwarding paths. Therefore, high reliability of multicast data distribution or network data distribution is ensured.

In another possible case, the network slice indication information of the first packet and the network slice indication information of the second packet may alternatively be different, and the forwarding path indication information of the first packet and the forwarding path indication information of the second packet may alternatively be the same.

Optionally, in a possible implementation, the first network device is the network device in the MPLS network or the SR-MPLS network.

According to a second aspect of this application, a packet processing method is provided. The method includes: A first network device receives a packet sent by a second network device, where the packet includes a multi-protocol label switching MPLS packet header, and the MPLS packet header includes first indication information and second indication information. The first network device determines a network slice corresponding to the packet based on the first indication information. The first network device forwards an updated packet to a third network device by using the network slice, where the third network device is a device on a forwarding path of the packet and is determined based on the second indication information. The first network device may be any transit node device or tail node device in an MPLS network. In this solution, the first network device may parse the first indication information in the MPLS packet header, and the first indication information may be a unified identifier used to identify a network slice in the MPLS network. The first network device may determine, based on the unified identifier, the network slice that needs to be used to forward the packet. In this solution, a network slice corresponding to a packet and a forwarding path of the packet are respectively indicated in an MPLS packet header by adding different indication information. In this way, network devices on the forwarding path can normally forward the packet based on unified network slice indication information, with no need to allocate different MPLS labels to the same network slice as slice identifiers. This can effectively save MPLS label resources. Further, SID resources can also be effectively saved by applying the packet processing method to an SR-MPLS network.

Optionally, in a possible implementation, that the first network device forwards an updated packet to a third network device by using the network slice includes: The first network device determines, based on the network slice corresponding to the packet, a forwarding resource allocated to the network slice. The first network device forwards the updated packet to the third network device by using the forwarding resource. In another possible case, in addition to being associated with the forwarding resource, the network slice may be further associated with a network topology. In this case, that the first network device forwards an updated packet to a third network device by using the network slice includes: The first network device determines, based on the network slice corresponding to the packet, the network topology and/or the forwarding resource corresponding to the network slice, and forwards the updated packet to the third network device based on the network topology and/or the forwarding resource.

Optionally, in a possible implementation, the forwarding resource includes one or more of the following resources: a processing resource, an outbound interface resource, and a queue resource of the first network device.

Optionally, in a possible implementation, the updated packet includes the first indication information, or the packet includes updated first indication information, the updated first indication information is determined based on the first indication information, and the updated first indication information indicates the network slice corresponding to the updated packet.

Optionally, in a possible implementation, the updated packet includes updated second indication information, and the updated second indication information indicates a forwarding path of the updated packet.

Optionally, in a possible implementation, before the first network device forwards the packet based on the network slice corresponding to the packet, the method further includes: The first network device decapsulates the packet to obtain a decapsulated packet, where the decapsulated packet does not include MPLS packet header information added by, for example, a head node (for example, the first network device that is described in the first aspect and that can implement a head node role), and the MPLS packet header information includes network slice indication information and forwarding path indication information. In this scenario, in a possible case, before the head node adds the MPLS packet header information to a packet initially obtained by the head node, the packet does not include an MPLS packet header, so that the head node may add a complete MPLS packet header including the MPLS packet header information. In this case, the first network device may remove the complete MPLS packet header through a decapsulation operation. In another possible case, before the head node adds the MPLS packet header information to a packet initially obtained by the head node, the packet already includes an MPLS packet header, so that the head node adds the corresponding MPLS packet header information to the existing MPLS packet header. In this case, the first network device may remove, through a decapsulation operation, at least the residual MPLS packet header information added by the head node in the MPLS packet header, but retain the original MPLS packet header included in the packet initially obtained by the head node. The first network device may be a tail node of the MPLS network. When the first network device implements a tail node role, the MPLS packet header information removed through the decapsulation operation may include, for example, network slice indication information added by the head node, and information (for example, a tail node label) that is not popped on a transit node in forwarding path indication information added by the head node.

Optionally, in a possible implementation, the MPLS packet header includes an MPLS label stack, the MPLS label stack includes a first label field and a second label field, the first label field indicates that the second label field includes the second indication information, and the second label field includes the second indication information.

Optionally, in a possible implementation, the first label includes an extension label and an extended special purpose label.

Optionally, in a possible implementation, the MPLS packet header includes an MPLS special purpose label, and a reserved field in the MPLS special purpose label includes the first indication information.

Optionally, in a possible implementation, the MPLS special label includes an entropy label or a flow identifier label.

Optionally, in a possible implementation, the reserved field includes one or more of the following fields: a priority field and a time to live field.

Optionally, in a possible implementation, the MPLS packet header includes an MPLS extension header, and the MPLS extension header carries the first indication information.

Optionally, in a possible implementation, the first network device is a network device in the MPLS network or the segment routing-multi-protocol label switching SR-MPLS network.

According to a third aspect of this application, a network device is provided. The network device is a first network device, and includes: an obtaining unit, configured to obtain a packet; a processing unit, configured to add first indication information and second indication information to the packet, to obtain an updated packet, where the first indication information and the second indication information are located in a multi-protocol label switching MPLS packet header of the updated packet, the first indication information indicates a network slice corresponding to the packet, and the second indication information indicates a forwarding path of the packet; and a transceiver unit, configured to send the updated packet to a second network device.

Optionally, in a possible implementation, the MPLS packet header includes an MPLS label stack, the MPLS label stack includes a first label field and a second label field, the first label field indicates that the second label field includes the second indication information, and the second label field includes the second indication information.

Optionally, in a possible implementation, the first label field includes an extension label EL and an extended special purpose label ESPL.

Optionally, in a possible implementation, the MPLS packet header includes an MPLS special purpose label, and a reserved field in the MPLS special purpose label includes the first indication information.

Optionally, in a possible implementation, the MPLS special purpose label includes an entropy label or a flow identifier Flow-ID label.

Optionally, in a possible implementation, the reserved field includes one or more of the following fields: a priority TC field and a time to live TTL field.

Optionally, in a possible implementation, the MPLS packet header includes an MPLS extension header, and the MPLS extension header carries the first indication information.

Optionally, in a possible implementation, the processing unit is further configured to determine, based on the network slice, a forwarding resource used to send the updated packet. The processing unit is specifically configured to send the updated packet by using the forwarding resource.

Optionally, in a possible implementation, the forwarding resource includes one or more of the following resources: a processing resource, an outbound interface resource, and a queue resource of the first network device.

Optionally, in a possible implementation, the processing unit is further configured to update the packet to obtain a second packet, where the second packet includes the first indication information and third indication information, and the third indication information indicates a forwarding path of the second packet. The transceiver unit is further configured to send the second packet to a third network device.

Optionally, in a possible implementation, the first network device is a network device in an MPLS network or a segment routing-multi-protocol label switching SR-MPLS network.

According to a fourth aspect of this application, a network device is provided. The network device is a first network device, and includes: a transceiver unit, configured to receive a packet sent by a second network device, where the packet includes a multi-protocol label switching MPLS packet header, and the MPLS packet header includes first indication information and second indication information; and a processing unit, configured to determine a network slice corresponding to the packet based on the first indication information. The transceiver unit is further configured to forward an updated packet to a third network device by using the network slice, where the third network device is a device on a forwarding path of the packet and is determined based on the second indication information.

Optionally, in a possible implementation, the processing unit is further configured to determine, based on the network slice corresponding to the packet, a forwarding resource allocated to the network slice. The transceiver unit is specifically configured to forward the updated packet to the third network device by using the forwarding resource.

Optionally, in a possible implementation, the forwarding resource includes one or more of the following resources: a processing resource, an outbound interface resource, and a queue resource of the first network device.

Optionally, in a possible implementation, the updated packet includes the first indication information, or the packet includes updated first indication information, the updated first indication information is determined based on the first indication information, and the updated first indication information indicates the network slice corresponding to the updated packet.

Optionally, in a possible implementation, the updated packet includes updated second indication information, and the updated second indication information indicates a forwarding path of the updated packet.

Optionally, in a possible implementation, the processing unit is further configured to decapsulate the packet to obtain a decapsulated packet.

Optionally, in a possible implementation, the MPLS packet header includes an MPLS label stack, the MPLS label stack includes a first label field and a second label field, the first label field indicates that the second label field includes the second indication information, and the second label field includes the second indication information.

Optionally, in a possible implementation, the first label includes an extension label and an extended special purpose label.

Optionally, in a possible implementation, the MPLS packet header includes an MPLS special purpose label, and a reserved field in the MPLS special purpose label includes the first indication information.

Optionally, in a possible implementation, the MPLS special label includes an entropy label or a flow identifier label.

Optionally, in a possible implementation, the reserved field includes one or more of the following fields: a priority field and a time to live field.

Optionally, in a possible implementation, the MPLS packet header includes an MPLS extension header, and the MPLS extension header carries the first indication information.

Optionally, in a possible implementation, the first network device is a network device in an MPLS network or a segment routing-multi-protocol label switching SR-MPLS network.

According to a fifth aspect of this application, a network device is provided. The network device includes a processor, configured to enable the network device to implement the method according to any possible implementation of the first aspect. The device may further include a memory. The memory is coupled to the processor. When the processor executes instructions stored in the memory, the network device may be enabled to implement the method according to any possible implementation of the first aspect. The device may further include a communication interface. The communication interface is used by the apparatus to communicate with another device. For example, the communication interface may be a transceiver, a circuit, a bus, a module, or another type of communication interface.

According to a sixth aspect of this application, a network device is provided. The network device includes a processor, configured to enable the network device to implement the method according to any possible implementation of the second aspect. The device may further include a memory. The memory is coupled to the processor. When the processor executes instructions stored in the memory, the network device may be enabled to implement the method according to any possible implementation of the second aspect. The device may further include a communication interface. The communication interface is used by the apparatus to communicate with another device. For example, the communication interface may be a transceiver, a circuit, a bus, a module, or another type of communication interface.

In this application, the instructions in the memory may be stored in advance, or may be stored after being downloaded from the Internet when the network device is used. A source of the instructions in the memory is not specifically limited in this application. The coupling in this application is an indirect coupling or a connection between apparatuses, units, or modules, may be in an electrical form, a mechanical form, or another form, and is used for information exchange between the apparatuses, the units, or the modules.

According to a seventh aspect of this application, a computer storage medium is provided. The computer storage medium may be non-volatile. The computer storage medium stores computer-readable instructions. When the computer-readable instructions are executed by a processor, the method according to any possible implementation of the first aspect or the second aspect is implemented.

According to an eighth aspect of this application, a computer program product including instructions is provided. When the computer program product runs on a computer, the computer is enabled to perform the method according to any possible implementation of the first aspect or the second aspect.

According to a ninth aspect of this application, a network system is provided. The network system includes the network device according to any implementation of the third aspect and the network device according to any implementation of the fourth aspect. Alternatively, the network system includes the network device according to any implementation of the fifth aspect and the network device according to any implementation of the sixth aspect.

Optionally, in a possible implementation, the network system may include a plurality of network devices according to any implementation of the fourth aspect or the sixth aspect.

The solutions provided in the third aspect to the ninth aspect are used to implement or cooperate to implement the methods provided in the first aspect and the second aspect, and therefore, can achieve beneficial effects the same as or corresponding to those in the first aspect and the second aspect. Details are not described herein again.

### BRIEF DESCRIPTION OF DRAWINGS

FIG. 1(a) is a schematic diagram of a structure of a network according to an embodiment of this application;
FIG. 1(b) is a schematic diagram of a structure of a network slice according to an embodiment of this application;
FIG. 1(c) is a schematic diagram of a structure of another network slice according to an embodiment of this application;
FIG. 1(d) is a schematic diagram of a structure of another network slice according to an embodiment of this application;
FIG. 2 is a schematic flowchart of a packet processing method 200 according to an embodiment of this application;
FIG. 3 is a schematic diagram of packet forwarding according to an embodiment of this application;
FIG. 4 is a schematic diagram of structures of MPLS labels according to an embodiment of this application;
FIG. 5 is a schematic diagram of structures of other MPLS labels according to an embodiment of this application;
FIG. 6 is a schematic diagram of a format of an MPLS packet header according to an embodiment of this application;
FIG. 7 is a schematic diagram of a format of an extension header according to an embodiment of this application;
FIG. 8 is a schematic flowchart of a packet processing method 800 according to an embodiment of this application;
FIG. 9 is a schematic diagram of a structure of a network device 900 according to an embodiment of this application;
FIG. 10 is a schematic diagram of a structure of a network device 1000 according to an embodiment of this application; and
FIG. 11 is a schematic diagram of a structure of a network system 1100 according to an embodiment of this application.

### DETAILED DESCRIPTION OF EMBODIMENTS

To make objectives, technical solutions, and advantages of this application clearer, the following describes embodiments of this application with reference to the accompanying drawings. It is clear that the described embodiments are merely some rather than all of embodiments of this application. A person of ordinary skill in the art may learn that the technical solutions provided in embodiments of this application are also applicable to a similar technical problem as a new application scenario emerges.

In this specification, the claims, and the accompanying drawings of this application, the terms "first", "second", and the like are intended to distinguish between similar objects but do not necessarily indicate a specific order or sequence. It should be understood that data termed in such a way is interchangeable in proper circumstances, so that embodiments described herein can be implemented in orders other than the order illustrated or described herein. In addition, the terms "include", "contain", and any other variants are intended to cover the non-exclusive inclusion. For example, a process, method, system, product, or device that includes a list of steps or modules is not necessarily limited to those expressly listed steps or modules, but may include other steps or modules not expressly listed or inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. In this application, division into units is logical division and may be other division during actual implementation. For example, a plurality of units may be combined or integrated into another system, or some features may be ignored or not performed. In addition, the displayed or discussed mutual couplings or direct couplings or communication connections may be implemented through some interfaces. The indirect couplings or communication connections between the units may be implemented in an electrical form or another similar form. This is not limited in this application. In addition, units or sub-units described as separate parts may or may not be physically separate, may or may not be physical units, or may be distributed into a plurality of circuit units. Some or all of the units may be selected based on actual requirements to achieve the objectives of the solutions of this application.

In a 5G network, diversified services have different requirements on the network in terms of speeds, performance, security, reliability, latencies, and the like. For example, an enhanced mobile broadband (enhanced mobile broadband, eMBB) scenario (for example, a virtual reality scenario or an augmented reality scenario) has a high requirement for bandwidth, and requires xGbps-level bandwidth. For another example, a massive machine-type communications (massive machine-type communications, mMTC) scenario (for example, a wearable scenario or a smart grid scenario) needs to support access of a large quantity of devices, for example, needs to support access of hundreds of millions or billions of devices. For another example, an ultra-reliable and low-latency communications (ultra-reliable and low-latency communications, uRLLC) scenario (for example, a self-driving scenario, a remote surgery scenario, or an industrial control scenario) needs to support an ultra-low latency of 1 ms. Network slicing emerges to meet different scenarios, different requirements, and a superior experience requirement by flexibly constructing networks with different features based on the different scenarios and requirements.

Network slices are logical networks customized based on different service requirements on a physical or virtual network infrastructure. The network slice may be a complete end-to-end network including an access network, a transport network, a core network, and an application server, can provide a complete communication service, and has a specific network capability. Alternatively, the network slice may be any combination of an access network, a transport network, a core network, and an application server.

One network slice may be usually considered as an instantiated 5G network. Such a network structure allows operators to provide a network for users as a service, and physical networks can be freely combined based on indicators such as rate, capacity, coverage, latency, reliability, security, and availability, to meet requirements of different users.

An SR technology is used to control packet forwarding by adding an ordered instruction list to a packet. The instruction list may be referred to as a segment list (Segment List). Each label in the segment list may identify one link or node, and an entire label stack identifies a forwarding path from the top of the stack to the bottom of the stack. Each label in the segment list may be referred to as a segment identifier (Segment Identifier, SID). During packet forwarding, a corresponding link is searched for based on a stack top label of the label stack and the packet is forwarded on the link. After all labels in the label stack are popped, the packet reaches a destination.

MPLS may be used as a data plane technology of SR (which is referred to as SR-MPLS). In this case, an SID in SR is encapsulated and carried using an MPLS label stack on a data plane. There are two basic SID types of SR-MPLS: a prefix SID (prefix-SID) and an adjacency SID (adj-SID), which are respectively used to identify a node and a link in an SR network. An SID list obtained by combining the two types of SIDs can implement a source routing function of SR.

Currently, in a solution of implementing network slicing based on SR-MPLS, different SR SIDs are used to identify different network slices to which nodes and links belong. Specifically, each node needs to allocate different prefix-SIDs to different network slices as identifiers of the node in the different network slices. In addition, each node further needs to allocate different adj-SIDs to a connected link, to identify resources allocated to different network slices on the same link.

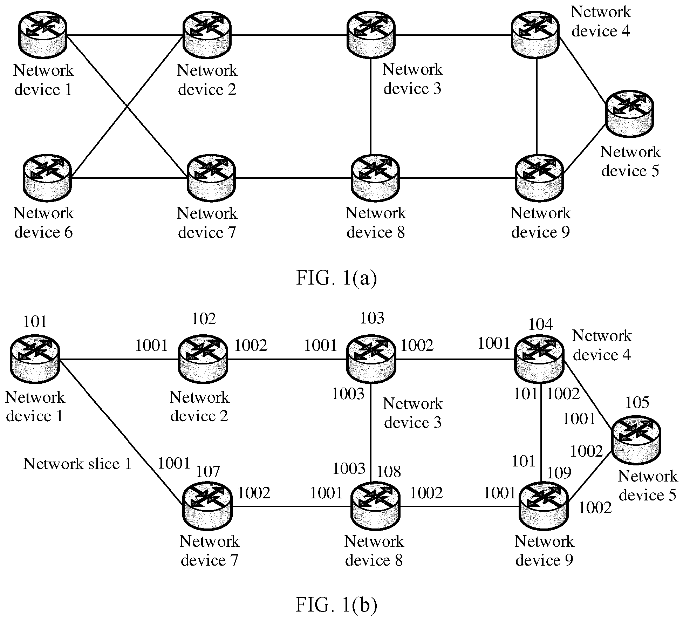

For example, FIG. 1(a) is a schematic diagram of a structure of a network according to an embodiment of this application. As shown in FIG. 1(a), the network architecture is an SR-MPLS network architecture, including a plurality of network devices: a network device 1 to a network device 9.

FIG. 1(b) is a schematic diagram of a structure of a network slice according to an embodiment of this application. As shown in FIG. 1(b), a network device 1 to a network device 5 and a network device 7 to a network device 9 in an SR-MPLS network architecture jointly constitute a network slice 1. Therefore, one prefix-SID is allocated to each network device (for example, network devices 101 to 105 and 107 to 109) in the network slice 1, and is used as an identifier of the network device in the network slice 1. In addition, each network device further needs to allocate a corresponding adj-SID to a connected link, to identify a resource allocated to the network slice 1 on the link.

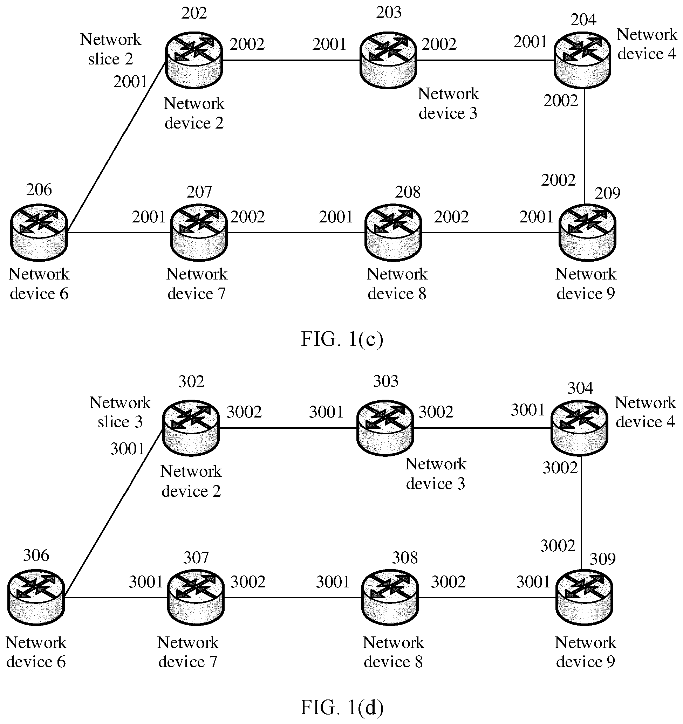

FIG. 1(c) is a schematic diagram of a structure of another network slice according to an embodiment of this application. As shown in FIG. 1(c), a network device 2 to a network device 4 and a network device 6 to a network device 9 in an SR-MPLS network architecture jointly constitute a network slice 2. Similarly, one prefix-SID is allocated to each network device (for example, network devices 202 to 204 and 206 to 209) in the network slice 2, and is used as an identifier of the network device in the network slice 2. In addition, each network device further needs to allocate a corresponding adj-SID to a connected link, to identify a resource allocated to the network slice 2 on the link.

As shown in FIG. 1(b) and FIG. 1(c), the network slice 1 and the network slice 2 correspond to different network topologies, meaning that different network slices may correspond to different network topologies. In some cases, different network slices may alternatively correspond to a same network topology, meaning that one network topology may correspond to a plurality of network slices. FIG. 1(d) is a schematic diagram of a structure of another network slice according to an embodiment of this application. As shown in FIG. 1(d), a network device 2 to a network device 4 and a network device 6 to a network device 9 in an SR-MPLS network architecture jointly constitute a network slice 3. In other words, a network topology corresponding to the network slice 3 is the same as a network topology corresponding to the network slice 2 in FIG. 1(c). Similarly, one prefix-SID also needs to be allocated to each network device (for example, network devices 302 to 304 and 306 to 309) in the network slice 3, and is used as an identifier of the network device in the network slice 3. In addition, each network device further needs to allocate a corresponding adj -SID to a connected link, to identify a resource allocated to the network slice 3 on the link.

It can be learned from the foregoing descriptions that, in a network, different network slices may be constituted by classifying different network topologies, and a same network topology may correspond to a plurality of different network slices. Therefore, a large quantity of network slices may be formed in the network depending on actual requirements. In addition, each network device needs to allocate different prefix-SIDs to different network slices, and allocate different adj-SIDs to a link connected to the network device. In other words, quantities of prefix-SIDs and adj-SIDs to be allocated are positively correlated with a quantity of network slices. In other words, in the case of a large quantity of network slices, if a current SR-MPLS data plane encapsulation technology is used for network slicing, a large quantity of prefix-SIDs and a large quantity of adj -SIDs need to be allocated to identify nodes and links in different network slices. Consequently, SID resources are severely consumed, and complexity of SID planning and management is increased. In addition, because SIDs that can be allocated to each network device are limited, a large quantity of SID resources on the network device are consumed in the case of a large quantity of network slices. Consequently, normal allocation of SID resources is affected.

In addition, because the SID is carried in an MPLS label, a single MPLS label may be used to identify a network slice and a forwarding path. When network slices are the same but links are different, and when network slices are different but links are the same, different MPLS labels are required for identification. Consequently, a large quantity of MPLS labels need to be allocated in the case of a large quantity and a large scale of network slices, causing severe consumption of MPLS label resources.

In view of this, embodiments of this application provide a packet processing method. An MPLS packet header is encapsulated for a packet on an MPLS data plane, and a network slice corresponding to the packet and a forwarding path of the packet are respectively indicated in the MPLS packet header via different indication information. In this way, network devices can normally forward the packet based on the network slice, with no need to identify the network slice and the forwarding path based on an MPLS label. This can effectively save MPLS label resources. Further, SID resources can also be effectively saved by applying the packet processing method to an SR-MPLS network.

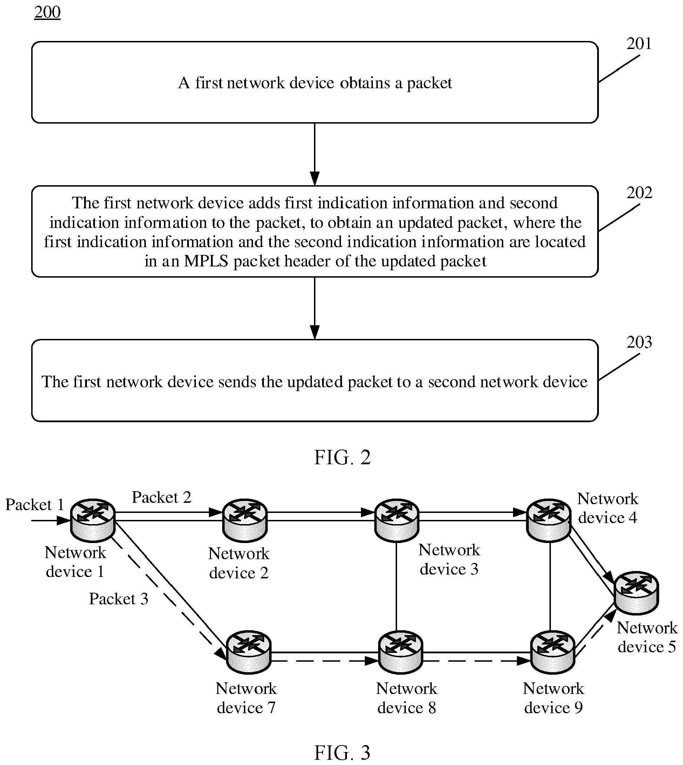

FIG. 2 is a schematic flowchart of a packet processing method 200 according to an embodiment of this application. The packet processing method 200 may be applied to the network structure shown in FIG. 1(a).

As shown in FIG. 2, the packet processing method 200 includes at least the following steps.

Step 201: A first network device obtains a packet.

In this embodiment, the first network device may be a network device in an MPLS network or an SR-MPLS network. The first network device may obtain the packet in the following manners: receiving the packet sent by another network device, for example, receiving a data packet sent by a network device outside the MPLS network; generating the packet by the first network device; or receiving the packet from user equipment on an access side.

Step 202: The first network device adds first indication information and second indication information to the packet, to obtain an updated packet, where the first indication information and the second indication information are located in an MPLS packet header of the updated packet. The first indication information indicates a network slice corresponding to the packet, and the second indication information indicates a forwarding path of the packet.

In this embodiment, after obtaining the packet, the first network device updates the packet, so that the MPLS packet header in the updated packet includes the first indication information and the second indication information. The packet obtained by the first network device may include an MPLS packet header. The first network device adds the first indication information and the second indication information to the MPLS packet header, to obtain the updated packet. Alternatively, the packet obtained by the first network device may not include an MPLS header. The first network device adds an MPLS packet header including the first indication information and the second indication information to the packet, to obtain the updated packet. The first network device performing the operation of adding the first indication information and the second indication information may be a head node in the MPLS network. The head node may be, for example, a tunnel endpoint or a network border node.

Before adding the first indication information and the second indication information to the packet, the first network device may determine the network slice corresponding to the packet and the forwarding path of the packet, to determine the first indication information and the second indication information.

In a possible embodiment, the first network device may determine the network slice corresponding to the packet based on information carried in the packet, or the first network device may determine the network slice corresponding to the packet based on resource information used to receive the packet.

For example, a policy for determining the network slice may be preconfigured in the first network device. The first network device may determine, according to an indication of the policy and based on a source address, a destination address, or a protocol number in the packet, the network slice corresponding to the packet, namely, a network slice used to forward the packet. The source address may be, for example, a source internet protocol (Internet Protocol, IP) address or a source media access control (Media Access Control, MAC) address for sending the packet, for example, an address of a user host or a base station. The destination address may be, for example, a destination IP address or a destination MAC address of the packet. Alternatively, the first network device may determine the network slice corresponding to the packet based on some other fields in the packet, for example, a differentiated services code point (Differentiated Services Code Point, DSCP) field or a traffic class (Traffic Class) field in an internet protocol version 4 (Internet Protocol Version 4, IPv4) or IPv6 packet header, or a virtual local area network identifier (Virtual Local Area Network identifier, VLAN ID) in an Ethernet header The first network device may specifically determine, based on one of the foregoing fields (for example, the source address, the destination address, the protocol number, the DSCP field, or the TC field) or a combination of several fields in the foregoing fields, the network slice to which the packet belongs.

The first network device may establish, based on a user-side service requirement, a correspondence between a source device address for sending a service packet and a network slice. In this way, after receiving a service packet sent by a user side, the first network device may determine a corresponding network slice based on a source address in the service packet.

Similarly, the first network device may also pre-establish a correspondence between a destination address and a network slice. After receiving a service packet, the first network device may determine a corresponding network slice based on a destination address in the service packet.

In addition, the protocol number in the packet may indicate a data protocol used for data carried in the packet. When a correspondence between a data protocol and a network slice is pre-established, the first network device may alternatively determine the network slice corresponding to the packet based on the protocol number in the packet.

For example, the first network device may alternatively determine the network slice corresponding to the packet based on the resource information used to receive the packet, where the resource information is, for example, physical interface information or logical interface information for receiving the packet by the first network device. For example, when a network slice corresponding to an inbound interface of the first network device is configured and the packet is forwarded by the another network device to the first network device, the another network device may forward, based on the network slice to which the packet belongs, the packet to the inbound interface corresponding to the first network device. Therefore, the first network device may determine the network slice corresponding to the packet based on inbound interface information for receiving the packet.

After determining the network slice corresponding to the packet, the first network device may generate the first indication information. The first indication information may include an identifier of the network slice, to indicate the network slice corresponding to the packet. The network device that receives the packet may determine, based on the identifier of the network slice in the first indication information, the network slice corresponding to the packet.

In a possible embodiment, the first network device may determine the forwarding path of the packet in the MPLS network based on the destination address of the packet, and generate the second indication information based on the forwarding path of the packet in the MPLS network.

The second indication information may indicate the forwarding path of the packet in a plurality of manners.

Manner 1: The second indication information may indicate the complete forwarding path of the packet in the MPLS network.

For example, the second indication information may include information about all nodes that the packet needs to pass through in a forwarding process. The network in FIG. 1(a) is used as an example. After receiving a packet, the network device 1 may determine that a forwarding path of the packet in the MPLS network is "network device 1--network device 2--network device 3--network device 4--network device 5". When the method provided in this embodiment of this application is applied to a conventional MPLS network, an MPLS label switching path may be pre-established using control signaling. Indication information generated by the network device 1 may carry only an MPLS label identifying the path, and node devices along the path switch MPLS labels (for example, a node device replaces an MPLS label A with an MPLS label B) hop by hop in a forwarding process of the packet. For the node device along the path of the packet, the MPLS label A in the packet received by the node device is a label allocated by the node to the path to a destination node. The node device may perform local table lookup based on the MPLS label A, to obtain the corresponding MPLS label B and an outbound interface for sending the packet. The MPLS label B is a label allocated by a next-hop node to the path to the same destination node.

When the method provided in this embodiment of this application is applied to an SR-MPLS network, indication information generated by the network device 1 may carry information about the network device 2, the network device 3, the network device 4, and the network device 5, to indicate the complete forwarding path of the packet in the MPLS network. For example, in the MPLS network, the network device 1 may include identifiers of the network device 2 to the network device 5 in a plurality of MPLS labels. In the SR-MPLS network, the network device 1 may include a segment list in an MPLS label stack, and the segment list includes a plurality of SIDs that separately indicate the network device 2 to the network device 5.

Manner 2: The second indication information may indicate a part of the forwarding path of the packet in the MPLS network.

For example, the second indication information may include information about a part of nodes that the packet needs to pass through in a forwarding process. The network in FIG. 1(a) is used as an example. When the network device 1 determines that a forwarding path of a packet in the MPLS network is "network device 1 --network device 2--...--network device 5", indication information generated by the network device 1 may carry only information about the network device 2 and the network device 5, to indicate network devices that the packet needs to pass through in the MPLS network (in other words, the packet needs to pass through the specified network device 2 and network device 5).

Manner 3: The second indication information may indicate only a tail node that the packet passes through in the MPLS network.

For example, the second indication information may include only information about the tail node that the packet needs to pass through in a forwarding process. In this way, in the process of forwarding the packet along the path, each network device that receives the packet may forward the packet based on the tail node indicated in the second indication information and a default forwarding policy (for example, a shortest path forwarding policy). In other words, the second indication information may indicate the forwarding path of the packet by indicating the tail node that the packet needs to pass through. The forwarding path of the packet is a default path in a case in which the head node and the tail node are specified. The network in FIG. 1(a) is also used as an example. After the network device 1 receives a packet, the network device 1 determines to forward the packet using a default path. Therefore, indication information generated by the network device 1 may carry only information about the network device 5, to indicate a tail node that the packet needs to pass through in the MPLS network. In this way, in the forwarding process of the packet, each network device that receives the packet forwards the packet to a next network device on the default path based on the default forwarding policy, so that the packet can be finally forwarded based on the default path.

Manner 4: The second indication information may indicate the former part of the complete path and indication information of information about the latter part of the complete path.

For example, when the forwarding path of the packet is long, the second indication information generated by the first network device may indicate only the former part of the complete path of the packet, and the second indication information may further indicate another node on the forwarding path of the packet to update the latter part of the path of the packet. The network in FIG. 1(a) is also used as an example. After receiving a packet, the network device 1 may determine that a forwarding path of the packet is "network device 1--network device 2--network device 3--network device 4--network device 5". Indication information generated by the network device 1 may carry information about the network device 2 and the network device 3, to indicate the former part of the forwarding path of the packet in the MPLS network. In addition, the indication information may further carry information used to indicate the network device 3 to update path information. For example, the indication information carries a binding segment identifier (binding segment identifier, binding-sid), and the binding-sid indicates subsequent path information of the packet. The network device 3 may update the subsequent path information in the packet based on the binding-sid. The binding-sid may indicate an intra-domain tunnel label stack, and the tunnel label stack may carry the subsequent path information of the packet. In other words, the indication information generated by the network device 1 may carry identification information of the network device 2 and the network device 3 by using a plurality of MPLS labels, and the indication information may further carry the binding-sid to indicate the network device 3 to update a subsequent forwarding path. The binding-sid indicates the subsequent path information, so that a quantity of label stack layers encapsulated by the network device can be reduced.

Step 203: The first network device sends the updated packet to a second network device.

After adding the first indication information and the second indication information to the packet, the first network device may send the updated packet to a next network device on the forwarding path. The second network device may be a network device on the forwarding path determined by the first network device, and the second network device is a neighboring network device of the first network device.

In a possible embodiment, the first network device may determine, based on the network slice, a forwarding resource used to send the updated packet, and the first network device sends the updated packet by using the forwarding resource. The forwarding resource may include one or more of the following resources: a processing resource, an outbound interface resource, and a queue resource of the first network device. The processing resource may be a resource used by the first network device to search for a forwarding entry used to forward the packet. More processing resources indicate higher efficiency of searching for the forwarding entry by the first network device. Therefore, a large quantity of processing resources may be configured for a network slice having a low latency requirement. The outbound interface resource may be an outbound interface used by the first network device to forward the packet, and the queue resource may be a forwarding queue in which the packet can enter when the first network device forwards the packet.

It may be understood that, because different network slices correspond to different service requirements, different forwarding resources may be configured for the different network slices in the network device, to meet the requirements of the network slices. In other words, a correspondence between a network slice and a forwarding resource may be preconfigured in the network device, so that the network device can determine, based on the network slice corresponding to the packet, the forwarding resource used to forward the packet.

In a possible embodiment, in addition to sending the packet to the second network device, the first network device may further send a packet to another neighboring network device. For example, in scenarios such as a high reliability scenario or a multicast distribution scenario, the first network device may copy a payload and/or other necessary data information of the obtained packet for a plurality of times, and add corresponding network slice indication information and forwarding path indication information to each of a plurality of packets generated through copying, so that the plurality of packets are forwarded along respective forwarding paths and by using corresponding network slice resources.

For example, the updated packet sent by the first network device to the second network device may be a first packet. The first network device may further update the packet to obtain a second packet, where the second packet may include third indication information, and the third indication information indicates a forwarding path of the second packet. The second packet may further include the first indication information that is the same as that of the first packet, and the second packet and the first packet may use a same network slice resource. The first network device sends the second packet to a third network device. In other words, the first network device may determine a plurality of paths used for packet forwarding, and may generate a plurality of packets based on information about network devices on the corresponding paths. Different packets carry different path indication information, to indicate forwarding of the packets on different paths.

FIG. 3 is a schematic diagram of packet forwarding according to an embodiment of this application. As shown in FIG. 3, after receiving a packet 1, a network device 1 may determine a network slice (for example, a network slice 1) corresponding to the packet 1, and two paths used to forward the packet 1. The two paths may be a path 1 "network device 1--network device 2--network device 3--network device 4--network device 5" and a path 2 "network device 1--network device 7--network device 8--network device 9--network device 5". The network device 1 may generate a packet 2 based on the path 1, and send the packet 2 to the network device 2. The packet 2 includes an identifier of the network slice 1 and information (for example, identifiers of the network device 2 to the network device 5) indicating the path 1. The network device 1 may generate a packet 3 based on the path 2, and send the packet 3 to the network device 7. The packet 3 includes the identifier of the network slice 1 and information (for example, identifiers of the network device 7 to the network device 9 and the network device 5) indicating the path 2. In this way, the network device 1 may copy the packet 1 to generate the packet 2 and the packet 3, and then add same network slice information and different path information to the packet 2 and the packet 3, to indicate to respectively forward the packet 2 and the packet 3 along the path 1 and the path 2 by using resources of the same network slice 1.

In the foregoing example, the first packet and the second packet carry same network slice indication information. For example, the packet 2 and the packet 3 carry the same identifier of the network slice 1, in other words, the network device 1 respectively indicates network devices that receive the packet 2 and the packet 3 on the path 2 and the path 3 to forward the packet 2 and the packet 3 by using the same network slice 1. In addition, the network device 1 may also forward the packet 2 and the packet 3 by using a same network slice resource. For example, when a forwarding resource corresponding to the network slice is a processing resource allocated on the network device 1 for packet forwarding, a processing resource used by the network device 1 to forward the packet 2 to the network device 2 may be the same as a processing resource used by the network device 1 to forward the packet 3 to the network device 7.

In another possible case, when the first network device determines a plurality of forwarding paths and forwards packets to a plurality of neighboring network devices, the first network device may include different network slice indication information in packets when forwarding the packets to different neighboring network devices, and may use different network slice resources. For example, when the forwarding resource corresponding to the network slice is an interface resource, an interface resource used by the first network device to forward the first packet to the second network device may be different from an interface resource used by the first network device to forward the second packet to the third network device.

The foregoing describes a process in which the network device adds the first indication information to the packet to forward the packet. For ease of understanding, the following describes in detail how to add the first indication information to the MPLS packet header with reference to specific examples.

In this embodiment, the MPLS packet header may carry the first indication information corresponding to the packet by using an MPLS label stack or an MPLS extension header

There may be a plurality of manners of carrying the identifier of the network slice corresponding to the packet by using the MPLS label stack.

In a possible embodiment, the MPLS packet header may include the MPLS label stack, the MPLS label stack includes first label information and second label information, the first label information indicates that the second label information carries identification information corresponding to the network slice, and the second label information carries the first identification information. Both the first label information and the second label information are located in the MPLS label stack. In addition, in the MPLS label stack, the first label information may be located above the second label information. In this way, after reading the first label information, the network device may determine that the second label information located after the first label information carries the identification information corresponding to the network slice.

In an example, the first label information includes an extension label (Extension Label, EL) and an extended special purpose label (Extended Special Purpose Label, ESPL). The extension label may be located above the extended special purpose label, and a value of the extension label may be a value defined in a related standard, for example, 15, to indicate that a label located after the extension label is the extended special purpose label. A value of the extended special purpose label may be a predefined value, to indicate that a label located after the extended special purpose label carries the identification information corresponding to the network slice. The label located after the extended special purpose label may also be referred to as a network slice label.

In other words, the MPLS label stack may include the extension label, the extended special purpose label, and the network slice label. The extended special purpose label is located after the extension label, and the network slice label is located after the extended special purpose label. It may be understood that the extension label, the extended special purpose label, and the network slice label are three adjacent labels, and the three adjacent labels may be located at any location in the entire MPLS label stack.

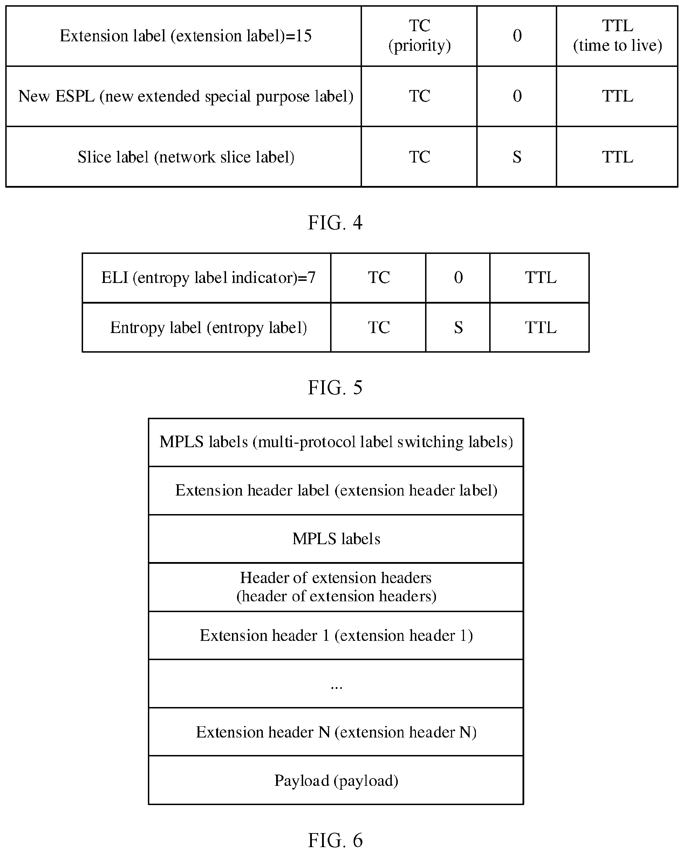

For example, FIG. 4 is a schematic diagram of structures of MPLS labels according to an embodiment of this application. As shown in FIG. 4, a lower layer of the extension label is the extended special purpose label, and a lower layer of the extended special purpose label is the network slice label. In addition to a label value field, each label may further include a priority (Traffic Class, TC) field, a bottom of stack field, and a time to live (Time to Live, TTL) field. The TC field indicates a packet priority ranging from 0 to 7. The bottom of stack field indicates a location of the label in the label stack. A value of the bottom of stack field S equal to 0 indicates that the label is not a bottom-layer label. A value of the bottom of stack field S equal to 1 indicates that the label is a bottom-layer label. The TTL field indicates time to live of the label.

When the network device reads the label stack, the network device may first read the upper-layer extension label, and may determine, based on a value 15 of the extension label, that a lower-layer label of the extension label is the extended special purpose label. When reading the extended special purpose label, the network device may determine, based on a predefined value of the extended special purpose label, that a lower-layer label of the extended special purpose label is the network slice label. Finally, the network device obtains the identifier corresponding to the network slice by reading the network slice label, to determine the network slice corresponding to the packet.

In another possible embodiment, the MPLS packet header includes an MPLS special purpose label, and a reserved field in the MPLS special purpose label includes the first indication information. The MPLS special purpose label may be a label predefined in a related standard, for example, an entropy label (Entropy Label, EL), a router alert label (Router Alert Label), or a flow identifier label (Flow-ID Label). The MPLS special purpose label has the reserved field, namely, a field that is reserved and has no actual use. The field may be used to carry the first indication information. The reserved field may include one or more of the following fields: a label value field (namely, a field indicating a specific value of the label), a TC field, and a TTL field.

For example, the MPLS special purpose label is the entropy label. FIG. 5 is a schematic diagram of structures of other MPLS labels according to an embodiment of this application. As shown in FIG. 5, the MPLS packet header includes an entropy label indicator (Entropy Label Indicator, ELI) and the entropy label. The entropy label indicator is a previous label of the entropy label, and indicates a location of the entropy label, where a label value of the entropy label indicator may be 7. In other words, when reading the entropy label indicator, the network device may determine that a next label of the entropy label indicator is the entropy label.

In the entropy label, a format of a label value field of the entropy label may be modified, to carry the identifier of the network slice. For example, for a 20-bit (bit) label value field, 12 bits in the label value field may indicate the identifier of the network slice, and may support indication of 4,000 network slices; the remaining 8 bits in the label value field are used for load balancing. In other words, the network device performs hash calculation based on a value indicated by the 8 bits in the label value field, and an obtained result may be used to select one of a plurality of equivalent paths for forwarding. Different packets have different hash results. Therefore, the network device selects different paths to forward the packets. In this way, traffic balancing and forwarding are implemented among a plurality of paths. In addition, a 3-bit TC field and an 8-bit TTL field in the entropy label may alternatively indicate the identifier of the network slice directly.

When the format of the label value field of the entropy label is modified to carry the identifier of the network slice, a field in the entropy label indicator may alternatively be used as an identifier, to indicate that the entropy label carries the identifier of the network slice. For example, a special value or a bit of a TC field in the entropy label indicator may be used for identification. In this way, the network device may determine, based on the special value or the bit of the TC field in the entropy label indicator, that the label value field of the entropy label has been modified to indicate the identifier of the network slice.

In another possible embodiment, the MPLS packet header includes the MPLS extension header (Extension Header), and the MPLS extension header carries the first indication information. The MPLS packet header may include one or more MPLS extension headers. The MPLS extension header is located below an MPLS label stack and above an upper-layer protocol header or a packet payload. The MPLS extension header carrying the first indication information may be a newly defined MPLS extension header, and is specifically used to carry the first indication information. The MPLS extension header carrying the first indication information may alternatively be an MPLS extension header defined in a related standard, and a new type length value (type length value, TLV) is defined in the defined MPLS extension header to carry the first indication information.

FIG. 6 is a schematic diagram of a format of the MPLS packet header according to an embodiment of this application. As shown in FIG. 6, the MPLS packet header includes a label stack, extension headers, and a payload (Payload). The label stack includes a plurality of MPLS labels, the plurality of MPLS labels include an extension header label (Extension Header Label), and the extension header label indicates that an MPLS extension header exists in the MPLS packet header Between the label stack and the payload, a header of extension headers (Header of Extension Headers) and a plurality of extension headers (an extension header 1 to an extension header N) are included. The extension header carrying the first indication information may be one of the extension header 1 to the extension header N, for example, an extension header defined in a related standard or a newly defined extension header The defined MPLS extension header may carry the first indication information by carrying a new TLV

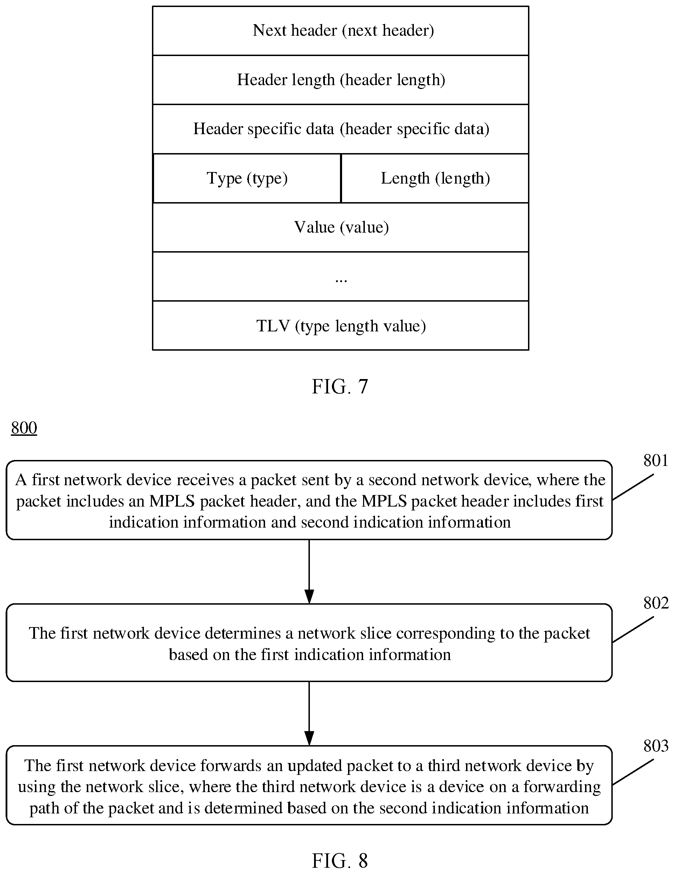

FIG. 7 is a schematic diagram of a format of the extension header according to an embodiment of this application. As shown in FIG. 7, the extension header may include a header length (Header Length) field, a header specific data (Header Specific Data) field, and a TLV field. The TLV field may indicate the identifier of the network slice, to carry the first indication information.

The foregoing describes in detail a process of forwarding a packet by a head node by using an example in which the first network device is a head node. The following describes in detail a process of forwarding a packet by a transit node or a tail node.

FIG. 8 is a schematic flowchart of a packet processing method 800 according to an embodiment of this application.

As shown in FIG. 8, the packet processing method 800 includes the following steps.

Step 801: A first network device receives a packet sent by a second network device, where the packet includes an MPLS packet header, and the MPLS packet header includes first indication information and second indication information.

The first network device may be a transit node or a tail node in an MPLS network or an SR-MPLS network, and the second network device may be a head node or a transit node in the MPLS network or the SR-MPLS network. The packet received by the first network device includes the first indication information and the second indication information. The first indication information indicates a network slice corresponding to the packet, and the second indication information indicates a forwarding path corresponding to the packet.

In a possible case, the second indication information carried in the packet received by the first network device may be complete path indication information initially added by the second network device to the packet, and the second network device may be, for example, a head node. For example, the first network device is a next network device on the forwarding path determined by the second network device. FIG. 3 is used as an example. If a network device 1 is a head node, a network device 2 is a next network device on a forwarding path 1 determined by the network device 1 for a packet 2, namely, the first transit node on the path 1. In this case, second indication information that is received by the network device 2 and that indicates the forwarding path is complete information that is added by the network device 1 and that indicates the path 1. The complete information may be information indicating the hop-by-hop forwarding path in the MPLS network as described above, information indicating a part of specified nodes on the path for forwarding, information indicating a tail node, or the like.

In another possible case, the second network device is a transit node, the first network device is a next network device located after the second network device on the forwarding path, and the second indication information carried in the packet received by the first network device may be partial path indication information, that is, information indicating a part of a path from the first network device to a destination device. FIG. 3 is used as an example. If a network device 1 is a head node, a network device 2 is a next network device on a forwarding path 1 determined by the network device 1 for a packet 2, namely, the first transit node on the path 1, and a network device 3 is a next network device located after the network device 2 on the path 1, namely, the second transit node on the path 1. Second indication information that is received by the network device 2 and that indicates the forwarding path may be complete information that is added by the network device 1 and that indicates the path 1, and the complete information may be information indicating the hop-by-hop forwarding path in an SR-MPLS network. For example, the complete information includes an identifier 2 indicating the network device 2, an identifier 3 indicating the network device 3, and an identifier 4 indicating a network device 4. Second indication information that is received by the network device 3 and that indicates the forwarding path may be information indicating a part of the path 1, and the information indicating the part of the path 1 may be information indicating a hop-by-hop forwarding path from the network device 3 to the network device 4 in the SR-MPLS network. For example, when the network device 2 removes the identifier indicating the network device 2 from the packet, and then sends the packet to the network device 3, the second indication information in the packet received by the network device 3 may include the identifier 3 indicating the network device 3 and the identifier 4 indicating the network device 4, that is, the information indicating the part of the path 1.

In another possible case, although the first network device is not the first transit node, the first network device may also receive complete path information added by a head node, for example, indication information that is added by the head node and that indicates only a tail node. In this case, although the first network device receives the packet including the second indication information from a previous transit node, other transit nodes including the previous transit node do not update the second indication information added by the head node. Therefore, in this case, the second indication information included in the packet received by the first network device is still the complete path information added by the head node.

In another possible case, the first network device may alternatively be a tail node. The second indication information received by the tail node may include an identifier of the tail node. The tail node may be an endpoint of one tunnel, an endpoint of several tunnels that are stitched, or a domain border node of a network domain or a management domain.

Step 802: The first network device determines the network slice corresponding to the packet based on the first indication information.

The first indication information may include an identifier of the network slice, to indicate the network slice corresponding to the packet. After receiving the packet, the first network device may determine the network slice corresponding to the packet based on the identifier of the network slice in the first indication information. For a manner of including the first indication information in the packet, refer to the descriptions in the foregoing embodiment. Details are not described herein again.

Step 803: The first network device forwards an updated packet to a third network device by using the network slice, where the third network device is a device on the forwarding path of the packet and is determined based on the second indication information.

In this embodiment, the first network device may determine, based on the packet forwarding path indicated by the second indication information, that the third network device is a next network device on the forwarding path. Therefore, the first network device may determine, based on the network slice, a forwarding resource corresponding to the packet, that is, a forwarding resource allocated by the first network device to the network slice corresponding to the packet, and forward the updated packet to the third network device by using the forwarding resource corresponding to the network slice. The forwarding resource may include one or more of the following resources: a processing resource, an outbound interface resource, and a queue resource of the first network device. A process in which the first network device determines the forwarding resource corresponding to the network slice and forwards the packet by using the forwarding resource is similar to that in the embodiment shown in FIG. 2. For details, refer to the foregoing embodiment. Details are not described herein again. In another possible case, the first network device may also determine, based on the network slice, other information related to packet forwarding, such as network topology information, to forward the packet based on the determined other information.

The second indication information may include a tunnel label used to identify a node or a link on the forwarding path, and may further include a service label, for example, a virtual private network (Virtual Private Network, VPN) label, used to identify a service. When the first network device is a tail node, a manner in which the tail node determines the third network device based on the second indication information may be: determining, based on the VPN label, an outbound interface and a next-hop network device (namely, the third network device) that are used to forward the service packet.

In a possible embodiment, the first network device updates the received packet to obtain the updated packet. The updated packet includes the first indication information, or the updated packet includes updated first indication information. The updated first indication information is determined based on the first indication information, and the updated first indication information indicates the network slice corresponding to the updated packet.

When the packet is forwarded through a plurality of network domains, for example, forwarded through a plurality of MPLS networks, network devices in the plurality of network domains may form a complete network slice, and quantities or types of resources allocated to a plurality of network slices in the plurality of network domains may be the same or may be different. However, regardless of the specific cases described above, network slice identifiers used in different network domains may be different, even though resources configured for network slices in the different network domains are the same. Therefore, when the first network device is a boundary device that is in a network domain and that is connected to another network domain, the first network device may update the first indication information in the received packet, to obtain the updated first indication information. The updated first indication information indicates a corresponding network slice identifier in a next network domain.

For example, network devices in a network domain 1 and a network domain 2 form a complete network slice 1, a network slice identifier corresponding to the network slice 1 in the network domain 1 is "001", and a network slice identifier corresponding to the network slice 1 in the network domain 2 is "002" . The first network device is a boundary device that is in the network domain 1 and that is connected to the network domain 2. The first network device receives a packet 1 forwarded by a network device in the network domain 1, where the packet 1 carries the network slice identifier "001". Before the first network device forwards the packet 1 to a network device in the network domain 2, the first network device may update the packet 1 to obtain an updated packet 1. The updated packet 1 includes an updated network slice identifier, and the updated network slice identifier is "002".

In a possible embodiment, the updated packet includes updated second indication information, and the updated second indication information indicates a forwarding path of the updated packet. When the packet sent by the second network device includes the second indication information, and the second indication information indicates the former part of the complete path and indication information of information about the latter part of the complete path, the first network device may update the second indication information based on the indication information of the information about the latter part of the path indicated in the second indication information, to obtain the updated second indication information, where the updated second indication information indicates the forwarding path of the updated packet. In this way, when the first network device forwards the updated packet, the updated packet includes the updated second indication information, to indicate a subsequent forwarding path of the updated packet.

In a possible embodiment, the first network device may alternatively be a tail node in the MPLS network or the SR-MPLS network. When the first network device is a tail node, before the first network device forwards the packet based on the network slice corresponding to the packet, the first network device may decapsulate the packet to obtain a decapsulated packet, where the decapsulated packet does not include the MPLS packet header added by the head node. In other words, when the first network device is a tail node in the MPLS network or the SR-MPLS network, the first network device needs to forward the packet outside the MPLS network or the SR-MPLS network. Therefore, the first network device may decapsulate the packet, to remove the MPLS packet header from the packet, so as to avoid a case in which a network device outside the MPLS network or the SR-MPLS network cannot identify the packet.

In some cases, the packet may carry an MPLS label stack before entering the MPLS network. In this case, the head node of the MPLS network adds a new MPLS label stack to the original MPLS label stack, to indicate the network slice corresponding to the packet and the forwarding path of the packet. In this case, when decapsulating the packet, the tail node decapsulates only the MPLS label stack added by the head node, and retains the original MPLS label stack in the packet. Therefore, the decapsulated packet obtained after the tail node decapsulates the packet still includes the MPLS label stack carried before the packet enters the MPLS network. In this case, the decapsulated packet forwarded by the tail node still includes an MPLS packet header carrying the original MPLS label stack.

In another embodiment, if the first network device is a tail node, the first network device may not perform the foregoing steps 802 and 803. However, after performing step 801, the first network device performs a removal operation on MPLS packet header information added by the head node, then searches for and determines, based on other information carried in the packet such as a destination IP address, a device for receiving the packet, and forwards the packet to the device. The device for receiving the packet may be, for example, a device on a user access side.

The foregoing embodiments use the example in which the first network device is a network device in the MPLS network or the SR-MPLS network to describe scenarios to which the packet processing method provided in embodiments of this application is applied. However, it may be understood that the packet processing method provided in embodiments of this application may be further applied to a network scenario in which a network slice corresponding to a packet needs to be indicated. A network scenario to which embodiments of this application are applied is not uniquely limited herein.

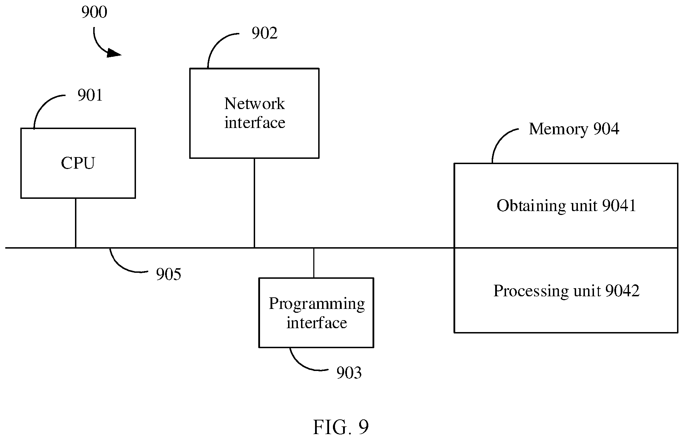

To implement the foregoing embodiments, this application further provides a network device. FIG. 9 is a schematic diagram of a structure of a network device 900 according to an embodiment of this application.

Although the network device 900 shown in FIG. 9 shows some specific features, a person skilled in the art may be aware from embodiments of this application that, for brevity, FIG. 9 does not show various other features, to avoid confusing more related aspects of the implementations disclosed in embodiments of this application. For this purpose, for example, in some implementations, the network device 900 includes one or more processing units (CPU) 901, a network interface 902, a programming interface 903, a memory 904, and one or more communication buses 905 that are configured to interconnect various components. In some other implementations, some functional components or units may be omitted or added to the network device 900 based on the foregoing example.

In some implementations, in addition to another purpose, the network interface 902 is configured to connect to one or more other network devices/servers in a network system. In some implementations, the communication bus 905 includes a circuit that interconnects system components and controls communication between the system components. The memory 904 may include a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The memory 904 may also include a volatile memory. The volatile memory may be a random access memory (random access memory, RAM), and is used as an external cache.

In some implementations, a non-transitory computer-readable storage medium of the memory 904 or the memory 904 stores the following programs, modules, and data structures, or a subset thereof, and for example, includes a transceiver unit (not shown in the figure), an obtaining unit 9041, and a processing unit 9042.

In a possible embodiment, the network device 900 may have any function of the first network device in the method 200 or the first network device in the method 800. The transceiver unit in the network device 900 is configured to perform step 203, step 801, or step 803. The obtaining unit 9041 is configured to perform step 201. The processing unit 9042 is configured to perform step 202 or step 802.

It should be understood that the network device 900 corresponds to the first network device in the foregoing method embodiments, and the modules in the network device 900 and the foregoing other operations and/or functions are separately used to implement various steps and methods implemented by the first network device in the method embodiments. For specific details, refer to the method 200 or the method 800. For brevity, details are not described herein again.

It should be understood that the foregoing function of the transceiver unit may be implemented by the processor by invoking program code in the memory, and cooperation with the network interface 902 is performed when necessary. Alternatively, a data receiving/sending operation may be completed by the network interface 902 on the network device 900.

In various implementations, the network device 900 is configured to perform the service processing method provided in embodiments of this application, for example, perform the packet processing method corresponding to the embodiment shown in FIG. 2 or FIG. 8.

In correspondence to the method embodiments and the virtual apparatus embodiment provided in this application, an embodiment of this application further provides a network device. The following describes a hardware structure of the network device.

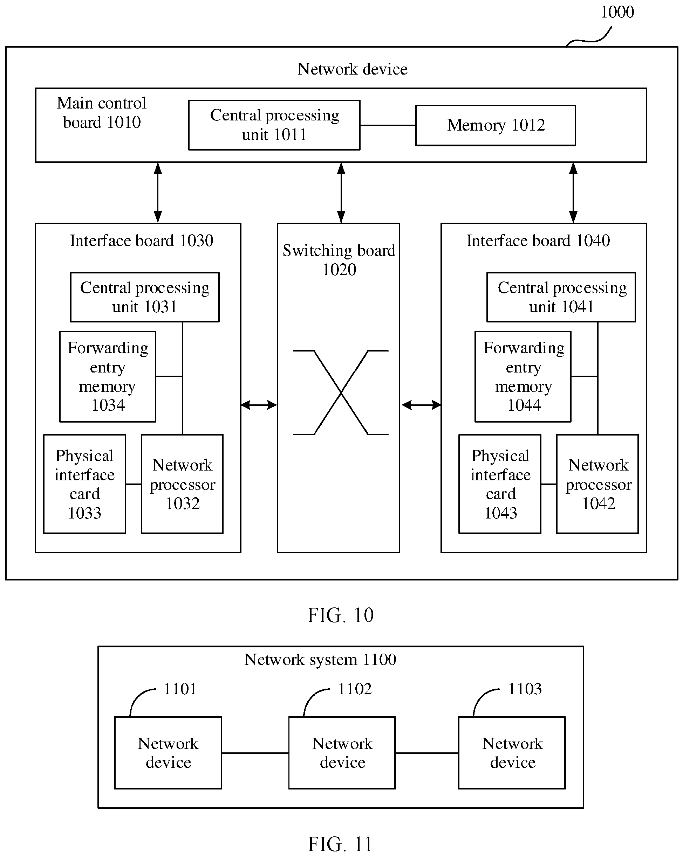

FIG. 10 is a schematic diagram of a structure of a network device 1000 according to an embodiment of this application. The network device 1000 may be configured as the first network device in the foregoing method embodiments.

The network device 1000 may correspond to the first network device in the foregoing method embodiments. Hardware and modules in the network device 1000 and the foregoing other operations and/or functions are separately used to implement various steps and methods implemented by the first network device in the method embodiments. For specific details of a detailed procedure about how the network device 1000 forwards a packet, refer to the foregoing method embodiments. For brevity, details are not described herein again. The steps of the foregoing method 200 or method 800 are completed by using an integrated logic circuit of hardware in a processor of the network device 1000 or by using instructions in a form of software. The steps in the methods disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing method in combination with the hardware of the processor. To avoid repetition, details are not described herein again.

The network device 1000 may also correspond to the network device 900 in the foregoing virtual apparatus embodiment, and each functional module in the network device 900 is implemented by using software and hardware of the network device 1000. In a possible implementation, the functional modules included in the network device 900 are generated after the processor of the network device 1000 reads program code stored in the memory, or are implemented by the processor of the network device 1000 by reading program code stored in the memory and cooperating with a communication interface.

The network device 1000 includes a main control board 1010 and an interface board 1030.

The main control board 1010 is also referred to as a main processing unit (main processing unit, MPU) or a route processing card (route processor card). The main control board 1010 controls and manages components in the network device 1000, including functions such as routing calculation, device management, device maintenance, and protocol processing. The main control board 1010 includes a central processing unit 1011 and a memory 1012.

The interface board 1030 is also referred to as a line interface unit card (line processing unit, LPU), a line card (line card), or a service board. The interface board 1030 is configured to: provide various service interfaces, and forward a data packet. The service interfaces include but are not limited to an Ethernet interface, a POS (Packet over SONET/SDH) interface, and the like. The Ethernet interface is, for example, a flexible Ethernet service interface (Flexible Ethernet Clients, FlexE Clients). The interface board 1030 includes a central processing unit 1031, a network processor 1032, a forwarding entry memory 1034, and a physical interface card (physical interface card, PIC) 1033.

The central processing unit 1031 on the interface board 1030 is configured to: control and manage the interface board 1030, and communicate with the central processing unit 1011 on the main control board 1010.

The network processor 1032 is configured to forward a packet. A form of the network processor 1032 may be a forwarding chip. Specifically, processing on an uplink packet includes processing at a packet ingress interface and forwarding table lookup, and processing on a downlink packet includes forwarding table lookup and the like.

The physical interface card 1033 is configured to implement a physical layer interconnection function. Original traffic enters the interface board 1030 from the physical interface card 1033, and a processed packet is sent out from the physical interface card 1033. The physical interface card 1033 includes at least one physical interface, and the physical interface is also referred to as a physical port. The physical interface card 1033 corresponds to a FlexE physical interface in a system architecture. The physical interface card 1033, also referred to as a subcard, may be mounted on the interface board 1030, and is responsible for converting an optical/electrical signal into a packet, performing validity check on the packet, and forwarding the packet to the network processor 1032 for processing. In some embodiments, the central processing unit 1031 on the interface board 1003 may also perform a function of the network processor 1032, for example, implement software forwarding based on a general-purpose CPU, so that the network processor 1032 is not required in the physical interface card 1033.

Optionally, the network device 1000 includes a plurality of interface boards. For example, the network device 1000 further includes an interface board 1040, and the interface board 1040 includes a central processing unit 1041, a network processor 1042, a forwarding entry memory 1044, and a physical interface card 1043.

Optionally, the network device 1000 further includes a switching board 1020. The switching board 1020 may also be referred to as a switch fabric unit (switch fabric unit, SFU). When the network device has a plurality of interface boards 1030, the switching board 1020 is configured to complete data exchange between the interface boards. For example, the interface board 1030 and the interface board 1040 may communicate with each other via the switching board 1020.

The main control board 1010 is coupled to the interface board 1030. For example, the main control board 1010, the interface boards 1030 and 1040, and the switching board 1020 are connected to a system backplane through a system bus to communicate with each other. In a possible implementation, an inter-process communication (inter-process communication, IPC) channel is established between the main control board 1010 and the interface board 1030, and the main control board 1010 communicates with the interface board 1030 through the IPC channel.

Logically, the network device 1000 includes a control plane and a forwarding plane. The control plane includes the main control board 1010 and the central processing unit 1031. The forwarding plane includes components that perform forwarding, such as the forwarding entry memory 1034, the physical interface card 1033, and the network processor 1032. The control plane performs functions such as routing, generating a forwarding table, processing signaling and a protocol packet, and configuring and maintaining a device status. The control plane delivers the generated forwarding table to the forwarding plane. At the forwarding plane, by performing table lookup based on the forwarding table delivered by the control plane, the network processor 1032 forwards a packet received by the physical interface card 1033. The forwarding table delivered by the control plane may be stored in the forwarding entry memory 1034. In some embodiments, the control plane and the forwarding plane may be completely separated, and are not on a same device.

If the network device 1000 is configured as the first network device in the method 200, the central processing unit 1011 may obtain a packet, and add first indication information and second indication information to the packet, to obtain an updated packet. The network processor 1032 triggers the physical interface card 1033 to send the updated packet to a second network device.

If the network device 1000 is configured as the first network device in the method 800, the central processing unit 1011 may obtain a packet, and determine, based on first indication information in the packet, a network slice corresponding to the packet. The network processor 1032 triggers the physical interface card 1033 to send an updated packet to a second network device.

It should be understood that the transceiver unit in the network device 900 may be equivalent to the physical interface card 1033 or the physical interface card 1043 in the network device 1000, and the obtaining unit 9041 and the processing unit 9042 in the network device 900 may be equivalent to the central processing unit 1011 or the central processing unit 1031 in the network device 1000.

It should be understood that an operation on the interface board 1040 is consistent with an operation on the interface board 1030 in this embodiment of this application. For brevity, details are not described again. It should be understood that the network device 1000 in this embodiment may correspond to the first network device or the second network device in the foregoing method embodiments. The main control board 1010, and the interface board 1030 and/or the interface board 1040 in the network device 1000 may implement functions and/or various steps implemented by the first network device or the second network device in the foregoing method embodiments. For brevity, details are not described herein again.

It should be noted that, there may be one or more main control boards, and when there are a plurality of main control boards, the main control boards may include an active main control board and a standby main control board. There may be one or more interface boards, and a network device having a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need the switching board, and the interface board provides a function of processing service data of an entire system. In a distributed forwarding architecture, the network device may have at least one switching board, and data exchange between a plurality of interface boards is implemented by using the switching board, to provide a large-capacity data exchange and processing capability. Therefore, a data access and processing capability of a network device in the distributed architecture is better than that of a device in the centralized architecture. Optionally, the network device may alternatively be in a form in which there is only one card. To be specific, there is no switching board, and functions of the interface board and the main control board are integrated on the card. In this case, the central processing unit on the interface board and the central processing unit on the main control board may be combined into one central processing unit on the card, to perform functions obtained after the two central processing units are combined. The device in this form (for example, a network device such as a low-end switch or router) has a weak data exchange and processing capability. Which architecture is specifically used depends on a specific networking deployment scenario, and is not uniquely limited herein.

In some possible embodiments, the first network device or the second network device may be implemented as a virtualized device. For example, the virtualized device may be a virtual machine (English: Virtual Machine, VM) on which a program having a packet sending function is run, and the virtual machine is deployed on a hardware device (for example, a physical server). The virtual machine is a complete software-simulated computer system that has complete hardware system functions and that runs in an entirely isolated environment. The virtual machine may be configured as the first network device or the second network device. For example, the first network device or the second network device may be implemented based on a general-purpose physical server in combination with a network functions virtualization (Network Functions Virtualization, NFV) technology. The first network device or the second network device is a virtual host, a virtual router, or a virtual switch. After reading this application, with reference to the NFV technology, a person skilled in the art may virtualize, on the general-purpose physical server, the first network device or the second network device having the foregoing functions. Details are not described herein.

It should be understood that the network devices in the foregoing product forms separately have any function of the first network device or the second network device in the foregoing method embodiments, and details are not described herein.

An embodiment of this application provides a computer program product. When the computer program product runs on a network device, the network device is enabled to perform the method performed by the first network device in the method 200 or the method 800.

With reference to FIG. 11, an embodiment of this application provides a network system 1100. The system 1100 includes a network device 1101 and a network device 1102. Optionally, the network device 1101 may be the first network device in the method 200, the network device 900, or the network device 1000, and the network device 1101 may be a head node in a network. The network device 1102 may be the first network device in the method 800, the network device 900, or the network device 1000, and the network device 1102 may be a transit node in the network. Optionally, the system 1100 may further include a network device 1103, the network device 1103 may be the network device 900 or the network device 1000, and the network device 1103 may be a tail node in the network.

An embodiment of this application further provides a chip, including a processor and an interface circuit. The interface circuit is configured to receive an instruction and transmit the instruction to the processor. The processor is coupled to a memory, the memory is configured to store a program or instructions, and when the program or the instructions are executed by the processor, the chip system is enabled to implement the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed independent of the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (microcontroller unit, MCU), a programmable controller (programmable logic device, PLD), or another integrated chip.

The foregoing describes in detail embodiments of this application. Steps in the methods in embodiments of this application may be sequentially scheduled, combined, or deleted based on an actual requirement. Modules in the apparatuses in embodiments of this application may be divided, combined, or deleted based on an actual requirement.

It should be understood that "one embodiment" or " an embodiment" mentioned in the entire specification means that particular features, structures, or characteristics related to the embodiment are included in at least one embodiment of this application. Therefore, "in one embodiment" or "in an embodiment" that appears throughout the entire specification does not necessarily mean a same embodiment. In addition, these particular features, structures, or characteristics may be combined in one or more embodiments in any appropriate manner. It should be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

The term "and/or" in this specification describes only an association relationship for describing associated objects and represents that there may be three relationships. For example, A and/or B may represent the following three cases: Only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined based on A. However, it should be further understood that determining B based on A does not mean that B is determined based on A only, and B may alternatively be determined based on A and/or other information.

A person of ordinary skill in the art may be aware that, in combination with the examples described in the embodiments disclosed in this specification, units and algorithm steps may be implemented by electronic hardware, computer software, or a combination thereof. To clearly describe interchangeability between the hardware and the software, the foregoing has generally described compositions and steps of each example based on functions. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electrical, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the current technology, or all or some of the technical solutions may be implemented in a form of a software product. The computer software product is stored in a storage medium and includes several instructions for instructing a computer device (which may be a personal computer, a server, a network device/server, or the like) to perform all or some of the steps of the methods in embodiments of this application. The foregoing storage medium includes any medium that can store program code, such as a USB flash drive, a removable hard disk, a read-only memory, a random access memory, a magnetic disk, or an optical disc.

## Claims

1. A packet processing method, comprising:
obtaining, by a first network device, a packet;
adding, by the first network device, first indication information and second indication information to the packet, to obtain an updated packet, wherein the first indication information and the second indication information are located in a multi-protocol label switching MPLS packet header of the updated packet, the first indication information indicates a network slice corresponding to the packet, and the second indication information indicates a forwarding path of the packet; and
sending, by the first network device, the updated packet to a second network device.

2. The packet processing method according to claim 1, wherein the MPLS packet header comprises an MPLS label stack, the MPLS label stack comprises a first label field and a second label field, the first label field indicates that the second label field comprises the first indication information, and the second label field comprises the first indication information.

3. The packet processing method according to claim 2, wherein the first label field comprises an extension label EL and an extended special purpose label ESPL.

4. The packet processing method according to claim 1, wherein the MPLS packet header comprises an MPLS special purpose label, and a reserved field in the MPLS special purpose label comprises the first indication information.

5. The packet processing method according to claim 4, wherein the MPLS special purpose label comprises an entropy label or a flow identifier Flow-ID label.

6. The packet processing method according to claim 4 or 5, wherein the reserved field comprises one or more of the following fields: a priority TC field and a time to live TTL field.

7. The packet processing method according to claim 1, wherein the MPLS packet header comprises an MPLS extension header, and the MPLS extension header carries the first indication information.

8. The packet processing method according to any one of claims 1 to 7, wherein the sending, by the first network device, the updated packet to a second network device comprises:
determining, by the first network device based on the network slice, a forwarding resource used to send the updated packet; and
sending, by the first network device, the updated packet by using the forwarding resource.

9. The packet processing method according to claim 8, wherein the forwarding resource comprises one or more of the following resources: a processing resource, an outbound interface resource, and a queue resource of the first network device.

10. The packet processing method according to any one of claims 1 to 9, wherein the updated packet sent by the first network device to the second network device is a first packet, and the method further comprises:
updating, by the first network device, the packet to obtain a second packet, wherein the second packet comprises the first indication information and third indication information, and the third indication information indicates a forwarding path of the second packet; and
sending, by the first network device, the second packet to a third network device.

11. The packet processing method according to any one of claims 1 to 10, wherein the first network device is a network device in an MPLS network or a segment routing-multi-protocol label switching SR-MPLS network.

12. A packet processing method, comprising:
receiving, by a first network device, a packet sent by a second network device, wherein the packet comprises a multi-protocol label switching MPLS packet header, and the MPLS packet header comprises first indication information and second indication information;
determining, by the first network device, a network slice corresponding to the packet based on the first indication information; and
forwarding, by the first network device, an updated packet to a third network device by using the network slice, wherein the third network device is a device on a forwarding path of the packet and is determined based on the second indication information.

13. The packet processing method according to claim 12, wherein the forwarding, by the first network device, an updated packet to a third network device by using the network slice comprises:
determining, by the first network device based on the network slice corresponding to the packet, a forwarding resource allocated by the first network device to the network slice; and
forwarding, by the first network device, the updated packet to the third network device by using the forwarding resource

14. The packet processing method according to claim 13, wherein the forwarding resource comprises one or more of the following resources: a processing resource, an outbound interface resource, and a queue resource of the first network device.

15. The packet processing method according to any one of claims 12 to 14, wherein the updated packet comprises the first indication information, or the packet comprises updated first indication information, the updated first indication information is determined based on the first indication information, and the updated first indication information indicates the network slice corresponding to the updated packet.

16. The packet processing method according to claim 15, wherein the updated packet comprises updated second indication information, and the updated second indication information indicates a forwarding path of the updated packet.

17. The packet processing method according to any one of claims 12 to 16, wherein before the first network device forwards the packet based on the network slice corresponding to the packet, the method further comprises:
decapsulating, by the first network device, the packet to obtain a decapsulated packet.

18. The packet processing method according to any one of claims 12 to 17, wherein the MPLS packet header comprises an MPLS label stack, the MPLS label stack comprises a first label field and a second label field, the first label field indicates that the second label field comprises the second indication information, and the second label field comprises the second indication information.

19. The packet processing method according to claim 18, wherein the first label comprises an extension label and an extended special purpose label.

20. The packet processing method according to any one of claims 12 to 17, wherein the MPLS packet header comprises an MPLS special purpose label, and a reserved field in the MPLS special purpose label comprises the first indication information.

21. The packet processing method according to claim 20, wherein the MPLS special label comprises an entropy label or a flow identifier label.

22. The packet processing method according to claim 20 or 21, wherein the reserved field comprises one or more of the following fields: a priority field and a time to live field.

23. The packet processing method according to any one of claims 12 to 22, wherein the MPLS packet header comprises an MPLS extension header, and the MPLS extension header carries the first indication information.

24. The packet processing method according to any one of claims 12 to 23, wherein the first network device is a network device in an MPLS network or a segment routing-multi-protocol label switching SR-MPLS network.

25. A network device, comprising a processor and a memory, wherein the memory is configured to store instructions, and the processor is configured to execute the instructions in the memory, so that the network device performs the method according to any one of claims 1 to 11.

26. A network device, comprising a processor and a memory, wherein the memory is configured to store instructions, and the processor is configured to execute the instructions in the memory, so that the network device performs the method according to any one of claims 12 to 24.

27. A network system, comprising the network device according to claim 25 and the network device according to claim 26.

28. A computer-readable storage medium, wherein the computer storage medium stores computer-readable instructions; and when the computer-readable instructions are executed by a processor, the method according to any one of claims 1 to 24 is implemented.
